Europäisches Patentamt

European Patent Office

Office européen des brevets

(11) Veröffentlichungsnummer: **0 206 254**
A2

(12) **EUROPÄISCHE PATENTANMELDUNG**

(21) Anmeldenummer: **86108343.4**

(51) Int. Cl.⁴: **H 01 B 3/30**

(22) Anmeldetag: **19.06.86**

(30) Priorität: **20.06.85 DE 3522108**

(71) Anmelder: **Siemens Aktiengesellschaft Berlin und München, Wittelsbacherplatz 2, D-8000 München 2 (DE)**

(43) Veröffentlichungstag der Anmeldung: **30.12.86 Patentblatt 86/52**

(72) Erfinder: **Leute, Ulrich, Dr., Herzogplatz 17, D-8011 Zorneding (DE)**
Erfinder: **Nickles, Ralf, Dipl.-Ing. (FH), Ostring 10, D-8751 Kleinwallstadt (DE)**

(84) Benannte Vertragsstaaten: **AT BE DE FR GB IT LU SE**

(54) **Elektrisch isolierende, gut wärmeleitende, mit einem Füllstoff versehene Kunststoffmasse.**

(57) Zur Verbesserung der Durchschlagsfestigkeit von Kunststoffmassen besteht der Füllstoff aus ultrahochorientierten Polymerfasern, die vorzugsweise in der Polymermatrix des Kunststoffes in der Richtung ausgerichtet sind, in der die Wärmeableitung erfolgen soll. Es werden Wärmeleitfähigkeitswerte im Bereich von 10 W/m.K bei 60% Faseranteil erreicht. Die Kunststoffmassen werden verwendet zur Wärmeableitung bei gleichzeitiger elektrischer Isolation von elektrischen und elektronischen Bauelementen und Geräten.

Siemens Aktiengesellschaft            Unser Zeichen
Berlin und München                    VPA **85 P 8 0 3 5** E

Elektrisch isolierende, gut wärmeleitende, mit einem
Füllstoff versehene Kunststoffmasse

Die Erfindung betrifft eine elektrisch isolierende, gut
wärmeleitende, mit einem Füllstoff versehene Kunststoffmasse.

Zur Ableitung von Verlustwärme, die in elektronischen
und elektrischen Bauelementen, Schaltungen und Geräten
entsteht, werden Kunststoffe benötigt, die zugleich
elektrisch isolieren und eine relativ hohe Wärmeleitfähigkeit von mindestens 2 W/m.K (= Watt/meter Kelvin)
besitzen. Bei zahlreichen Anwendungen wird dabei Isolation gegen Spannungen von 220 V und mehr gefordert.

Die Wärmeleitfähigkeit ungefüllter, nicht geschäumter
Kunststoffe liegt zwischen etwa 0,2 und 0,5 W/m.K. Bei
duroplastischen Preß- oder Vergußmassen werden durch
Zugabe von ca. 70 Gew.% Quarz Werte um 2 W/m.K erreicht.
Kunststoffe mit höherer Leitfähigkeit können so hergestellt werden, daß als Füllstoff geeignet elektrisch
isolierte Metallteilchen eingearbeitet werden.

Eine Kunststoffmasse, bei der eine relativ hohe Wärmeleitfähigkeit bei guter Isolation erreicht wird, ist beispielsweise in der deutschen Patentanmeldung P 34 42 031.1
vorgeschlagen worden. Dabei wird ein Füllstoff verwendet,
der aus in möglichst dichter Packung vorliegenden Metallkörnern besteht, die mit einer allseitig durch Vernetzen hergestellten Kunststoffumhüllung versehen sind.

Edt 1 Sti/14.06.1985 In der deutschen Patentanmeldung P 34 21 105 wird ein Thermoplast mit den eingangs genannten Eigenschaften vorgeschlagen, der Aluminiumpulverpartikel enthält, die an ihrer Oberfläche mit vernetzten Polyolefinen umhüllt sind.

Die eben genannten Kunststoffe können bei elektrischen Spannungen, wie sie in der Elektronik üblicherweise vorkommen (ungefähr 100 V) eingesetzt werden; bei geeigneter Verarbeitung auch im 220 V-Bereich. Bei höheren Spannungen reicht aber ihre Durchschlagsfestigkeit nicht aus, da immerhin elektrisch leitende Körner nur durch dünne Isolationsschichten getrennt sind.

Aufgabe der Erfindung ist es daher, einen Füllstoff einer elektrisch isolierenden, gut wärmeleitenden Kunststoffmasse anzugeben, mit dem es möglich ist, bei guter Wärmeleitfähigkeit auch Durchschlagsfestigkeiten bei Spannungen über 220 V zu erreichen.

Gelöst wird die erfindungsgemäße Aufgabe dadurch, daß der Füllstoff der eingangs genannten Kunststoffmasse aus ultrahochorientierten Polymerfasern besteht. Dabei ist in einer Weiterbildung des Erfindungsgedankens vorgesehen, daß die Polymerfasern in der Polymermatrix des Kunststoffes in der Richtung ausgerichtet sind, in der die Wärmeableitung erfolgen soll. Gemäß einem Ausführungsbeispiel nach der Lehre der Erfindung liegen die Polymerfasern in paralleler Anordnung vor.

Die Erfindung geht von dem Gedanken aus, daß die Wärmeleitfähigkeit in Polymeren, also elektrischen Isolatoren, nur durch Gitterschwingungen bewirkt wird. Vollständig amorphe Polymere leiten daher schlecht; bei den teilkristallinen nimmt die Wärmeleitfähigkeit mit dem Kristallanteil zu. Neben dem Kristallanteil spielt aber auch die Größe der Kristalle eine Rolle. Die größten zusammenhängenden kristallinen Bereiche findet man in ultrahochorientierten Polymeren, bei denen eine durch geeignete Methoden erzeugte Parallelisierung der Kettenmoleküle zu extremen Werten des Zugmoduls und der Festigkeit, aber auch zu einer sehr hohen Wärmeleitfähigkeit (ungefähr 10 W/m.K) führt - allerdings anisotrop nur in Kettenrichtung.

Aus ultrahochorientierten Polymermaterialien können nicht beliebig geformte Teile gefertigt werden; der Orientierungsprozeß führt notwendigerweise zu Fäden oder dünnen Profilen. Diese Tatsache nützt die Erfindung aus.

Bei in einer Polymermatrix aus Duroplasten oder geeigneten Thermoplasten eingearbeiteten ultrahochorientierten Polymerfasern nach der Erfindung ist die Haftung zwischen Faser und Matrix wegen der chemischen Ähnlichkeit sehr gut; beachtet werden muß nur, daß die Fasern bei Annäherung an ihren Schmelzpunkt ihre besonderen Eigenschaften verlieren. Da nur isolierende Materialien bei Füllstoff und Matrix gemäß der Lehre der Erfindung zum Einsatz kommen, ist die elektrische Durchschlagsfestigkeit hoch.

Als Füllstoffe kommen alle Polymere in Frage, die geeignet orientierbar sind. Es sind dies z.B. die Polyolefine, Polyoxymethylen, isotaktisches Polystyrol, sowie Mischungen und Copolymere dieser Stoffe.

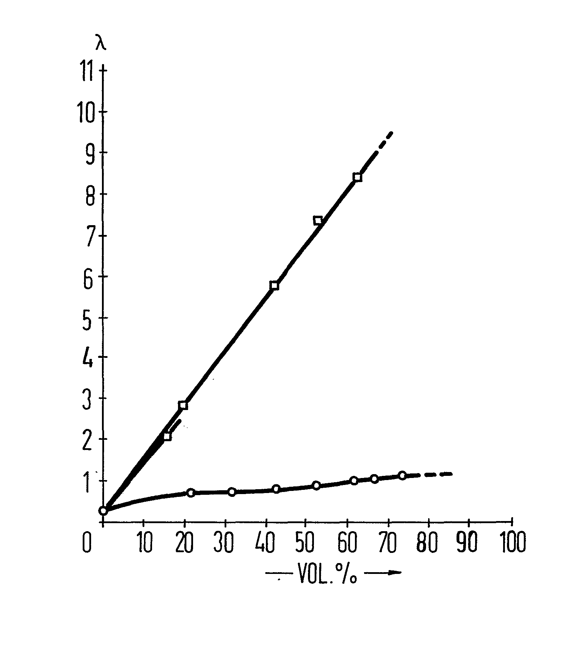

Anhand von Ausführungsbeispielen und dem in der Zeichnung vorliegenden Diagramm, in dem die Abhängigkeit der Wärmeleitfähigkeit $\lambda$ in W/m.K vom zugesetzten Faseranteil in Vol % eingetragen ist, wird nachfolgend die Erfindung noch näher erläutert. Dabei zeigt die mit dem Kreissymbol gekennzeichnete Kurve die Werte für ungerichtete Polyäthylenfäden in Epoxidharz an, während die mit den Vierecksymbolen gekennzeichnete Kurve für die Werte der in Epoxidharz gerichtet angeordneten Polyäthylenfäden steht.

1. Polyäthylenfäden, nach dem von Pennings in Makromol. Chem., Suppl. 2 (1979), S.99-142 beschriebenen Verfahren durch Kristallisation aus orientierter Lösung an einem Rotor (sog. surface growth method) hergestellt, werden in Fasern von einer Länge von etwa 1 mm zerschnitten und regellos in Epoxidharz eingemischt. Wie aus dem anliegenden Diagramm zu entnehmen ist, beträgt die Wärmeleitfähigkeit $\lambda$ bei ca. 60 Vol % Faseranteil 1 W/m.K.

2. Polyäthylenfäden, hergestellt und zerschnitten wie oben beschrieben, werden parallel ausgerichtet in Epoxidharz eingeführt. Wie aus dem Diagramm zu entnehmen ist, ergibt ein Volumenanteil von 20 % Fasern eine Wärmeleitfähigkeit $\lambda$ von ca. 3 W/m.K, ein Volumenanteil von 40 % Fasern Werte im Bereich von 5,5 W/m.K; bei 60 % Faseranteil wurden schließlich $\lambda$-Werte von 8 W/m.K erreicht.

1 Figur
8 Patentansprüche

0206254

## Patentansprüche

1. Elektrisch isolierende, gut wärmeleitende, mit einem Füllstoff versehene Kunststoffmasse, d a d u r c h g e k e n n z e i c h n e t , daß der Füllstoff aus ultrahochorientierten Polymerfasern besteht.

2. Kunststoffmasse nach Anspruch 1, d a d u r c h g e k e n n z e i c h n e t , daß die Polymerfasern in der Polymermatrix des Kunststoffes in der Richtung ausgerichtet sind, in der die Wärmeableitung erfolgen soll.

3. Kunststoffmasse nach Anspruch 1 und/oder 2, d a - d u r c h g e k e n n z e i c h n e t , daß die Polymerfasern in paralleler Anordnung vorliegen.

4. Kunststoffmasse nach mindestens einem der Ansprüche 1 bis 3, d a d u r c h g e k e n n z e i c h n e t , daß die Polymerfasern aus Polyolefinen, Polyoxymethylen, isotaktischem Polystyrol und Mischungen bzw. Copolymeren dieser Stoffe bestehen.

5. Kunststoffmasse nach mindestens einem der Ansprüche 1 bis 4, d a d u r c h g e k e n n z e i c h n e t , daß Polyäthylenfäden verwendet werden.

6. Kunststoffmasse nach mindestens einem der Ansprüche 1 bis 5, d a d u r c h g e k e n n z e i c h n e t , daß die Fasern bzw. Fäden durch Kristallisation aus orientierter Lösung an einem Rotor erzeugt sind.

7. Kunststoffmasse nach mindestens einem der Ansprüche 1 bis 6, d a d u r c h g e k e n n z e i c h n e t , daß die Fasern bzw. Fäden eine Länge im Bereich 1 mm aufweisen.

8. Verwendung von Kunststoffmassen nach den Ansprüchen
1 bis 7 zur Wärmeableitung und zur gleichzeitigen Isolierung bei elektrischen und elektronischen Bauelementen, Baugruppen und Geräten.